# EUROPEAN PATENT SPECIFICATION

(11) **EP 3 681 071 B1**
(45) Date of publication and mention of the grant of the patent: **23.04.2025**
(21) Application number: 18859870.0
(22) Date of filing: 21.09.2018
(51) Int. Cl.: H04L 1/18, H04L 1/08

(54) **DATA TRANSMISSION METHOD, TERMINAL DEVICE AND NETWORK DEVICE**
DATENÜBERTRAGUNGSVERFAHREN, ENDGERÄTEVORRICHTUNG UND NETZWERKVORRICHTUNG
PROCÉDÉ DE TRANSMISSION DE DONNÉES, DISPOSITIF TERMINAL ET DISPOSITIF DE RÉSEAU

(30) Priority: 21.09.2017 CN 201710860283
(43) Date of publication of application: 15.07.2020
(73) Proprietor: Huawei Technologies Co., Ltd., Longgang District Shenzhen, Guangdong 518129 (CN)
(72) Inventor: LIU, Hang, Shenzhen Guangdong 518129 (CN); CAO, Zhenzhen, Shenzhen Guangdong 518129 (CN); WANG, Hejun, Shenzhen Guangdong 518129 (CN); LI, Mingchao, Shenzhen Guangdong 518129 (CN); XIAO, Xiao, Shenzhen Guangdong 518129 (CN)
(74) Representative: Maiwald GmbH
(86) International application number: PCT/CN2018/106951
(87) International publication number: WO 2019/057154

(56) References cited:
- WO-A1-2019/029375
- CN-A- 103 929 779
- CN-A- 106 488 384
- US-A1- 2016 295 345
- SAMSUNG: "Discussion on packet duplication in eV2X", vol. RAN WG2, no. Berlin, Germany; 20170821 - 20170825, 20 August 2017 (2017-08-20), XP051318800, Retrieved from the Internet <URL:http://www.3gpp.org/ftp/Meetings_3GPP_SYNC/RAN2/Docs/> [retrieved on 20170820]
- OPPO: "Packet duplication in CA-based eV2x", vol. RAN WG2, no. Berlin, Germany; 20170821 - 20170825, 20 August 2017 (2017-08-20), XP051317661, Retrieved from the Internet <URL:http://www.3gpp.org/ftp/Meetings_3GPP_SYNC/RAN2/Docs/> [retrieved on 20170820]
- ERICSSON: "Packet duplication for PC5", vol. RAN WG2, no. Berlin, Germany; 20170821 - 20170825, 20 August 2017 (2017-08-20), XP051319116, Retrieved from the Internet <URL:http://www.3gpp.org/ftp/Meetings_3GPP_SYNC/RAN2/Docs/> [retrieved on 20170820]
- ASUSTEK: "Multiple sidelink transmissions within one SC period for Mode1 and Mode2", vol. RAN WG2, no. Anaheim, USA; 20151116 - 20151120, 6 November 2015 (2015-11-06), XP051024558, Retrieved from the Internet <URL:http://www.3gpp.org/ftp/tsg_ran/WG2_RL2/TSGR2_92/Docs/> [retrieved on 20151106]

## Description

### TECHNICAL FIELD

This application relates to communications technologies, and in particular, to a data transmission method, a terminal device, and a network device.

### BACKGROUND

An Internet of Vehicles system is a big system network that performs wireless communication and information exchange in vehicle to X (vehicle to X, V2X) based on an intra-vehicle network, an inter-vehicle network, and an in-vehicle mobile Internet according to a specified communications protocol and a data exchange standard. The Internet of Vehicles system can improve road safety and traffic efficiency through the communication of the V2X. The V2X may be vehicle to vehicle (vehicle to vehicle, V2V), vehicle to network (vehicle to network, V2N), vehicle-to-infrastructure (vehicle-to-infrastructure, V2I), vehicle to pedestrian (vehicle to pedestrian, V2P), and the like. To be specific, the X may be a vehicle, an infrastructure, a network, a pedestrian, and the like.

Because a cellular technology has advantages such as a short latency, a high speed, wide coverage, a large capacity, and high reliability, it has become a main trend currently that the V2X in the Internet of Vehicles performs communication by using the cellular technology. Currently, the V2X may communicate with each other by using the cellular technology and by using a straight-through link (also referred to as a sidelink, sidelink, and the like). To be specific, the vehicle to X may directly communicate with each other through the straight-through link by using a resource scheduled or configured by a network device or by using a pre-configured resource, and the network device does not need to perform forwarding.

Currently, when the V2X communicates with each other by using the straight-through link, how to implement repeat transmission of data is a problem that urgently needs to be resolved. SAMSUNG: "Discussion on packet duplication in eV2X", 3GPP DRAFT; R2-1709006 DISCUSSION ON PACKET DUPLICATION IN EV2X, 3RD GENERATION PARTNERSHIP PROJECT (3GPP), MOBILE COMPETENCE CENTRE; 650, ROUTE DES LUCIOLES; F-06921 SOPHIA-ANTIPOLIS CEDEX; FRANCE vol. RAN WG2, no. Berlin, Germany; 20170821 - 20170825 20 August 2017 (2017-08-20), XP051318800 describes a discussion on packet duplication in eV2X.

WO 2019/029375 A1 describes a method for sidelink data duplication.

OPPO: "Packet duplication in CA-based eV2x", 3GPP DRAFT; R2-1707699 - PACKET DUPLICATION IN CA-BASED EV2X, 3RD GENERATION PARTNERSHIP PROJECT (3GPP), MOBILE COMPETENCE CENTRE; 650, ROUTE DES LUCIOLES; F-06921 SOPHIA-ANTIPOLIS CEDEX; FRANCE vol. RAN WG2, no. Berlin, Germany; 20170821 - 20170825 20 August 2017 (2017-08-20), XP051317661 describes packet duplication in CA-based eV2x.

### SUMMARY

This application provides a data transmission method, a terminal device, and a computer-readable storage medium and can implement repeat transmission of data when V2X communicates with each other by using a straight-through link.

The present invention is defined by the independent claims. Additional features of the invention are presented in the dependent claims. In the following, parts of the description and drawing referring to embodiments, which are not covered by the claims are not presented as embodiments of the invention, but as examples useful for understanding the invention.

### BRIEF DESCRIPTION OF DRAWINGS

FIG. 1 is a block diagram of a communications system in this application;
FIG. 2 is a schematic diagram 1 of a scenario of V2X communication;
FIG. 3 is a schematic diagram 2 of a scenario of V2X communication;
FIG. 4 is a schematic diagram 3 of a scenario of V2X communication;
FIG. 5 is a signaling flowchart of a data transmission method according to this application;
FIG. 6 is a schematic structural diagram of a protocol stack according to this application;
FIG. 7 is a signaling flowchart of another data transmission method according to this application;
FIG. 8 is a schematic structural diagram of a terminal device according to this application;
FIG. 9 is a schematic structural diagram of another terminal device according to this application;
FIG. 10 is a schematic structural diagram of a network device according to this application;
FIG. 11 is a schematic structural diagram of still another terminal device according to this application;
FIG. 12 is a schematic structural diagram of an apparatus according to this application;
FIG. 13 is a schematic structural diagram of another apparatus according to this application;
FIG. 14 is a schematic structural diagram of still another apparatus according to this application;
FIG. 15 is a schematic structural diagram of still another apparatus according to this application;
FIG. 16 is a schematic structural diagram of still another terminal device according to this application;
FIG. 17 is a schematic structural diagram of still another terminal device according to this application;
FIG. 18 is a schematic structural diagram of another network device according to this application; and
FIG. 19 is a schematic structural diagram of still another terminal device according to this application.

### DESCRIPTION OF EMBODIMENTS

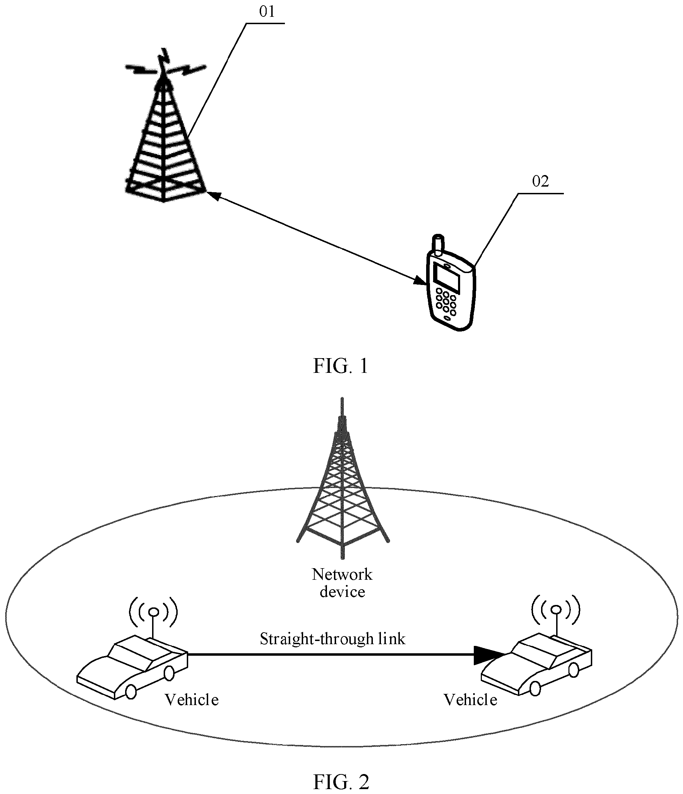

FIG. 1 is a block diagram of a communications system in this application. The data transmission method provided in this application is applicable to the communications system shown in FIG. 1. The communications system may be an LTE communications system, or another future communications system (for example, a 5G communications system). This is not limited in this application. As shown in FIG. 1, the communications system includes a network device and a terminal device.

The network device may be a base station, or an access point, or may be a device in communication with a wireless terminal via one or more sectors on an air interface in an access network. The base station may be configured to: mutually convert a received over-the-air frame and an IP packet and serve as a router between the wireless terminal and a rest portion of the access network, where the rest portion of the access network may include an Internet protocol (IP) network. The base station may further coordinate attribute management of the air interface. For example, the base station may be a base transceiver station (base transceiver station, BTS) in a global system for mobile communications (Global System for Mobile communications, GSM) or in code division multiple access (Code Division Multiple Access, CDMA), a NodeB (nodeB, NB) in wideband code division multiple access (Wideband Code Division Multiple Access, WCDMA), an evolved NodeB (evolutional node B, eNB, or eNodeB) in long term evolution (Long Term Evolution, LTE), or a relay station, an access point, or a base station in a future 5G network, or the like. This is not limited herein.

The terminal device may be a terminal device (for example, an in-vehicle terminal device, or a terminal device carried by a user taking a vehicle) located on a vehicle in V2X, a terminal device located on X (X may be a vehicle, an infrastructure, a network, a pedestrian, and the like), or the vehicle terminal or the X. The terminal device herein may be a wireless terminal or a wired terminal. The wireless terminal may refer to a device that provides a user with voice and/or other service data connectivity, a handheld device with a radio connection function, or another processing device connected to a radio modem. The wireless terminal may communicate with one or more core networks through a radio access network (radio access network, RAN). The wireless terminal may be a mobile terminal, such as a mobile phone (also referred to as a "cellular" phone) and a computer with a mobile terminal, for example, may be a portable, pocket-sized, handheld, computer built-in, or in-vehicle mobile apparatus, which exchanges voice and/or data with the radio access network. For example, the wireless terminal may be a device such as a personal communications service (personal communication service, PCS) phone, a cordless telephone set, a session initiation protocol (session initiation protocol, SIP) phone, a wireless local loop (wireless local loop, WLL) station, or a personal digital assistant (personal digital assistant, PDA). The wireless terminal may also be referred to as a system, a subscriber unit (subscriber unit), a subscriber station (subscriber station), a mobile station (mobile station), a mobile (mobile), a remote station (remote station), a remote terminal (remote terminal), an access terminal (access terminal), a user terminal (user terminal), a user agent (user agent), or user equipment (user device or user equipment). This application is not limited thereto.

FIG. 2 is a schematic diagram 1 of a scenario of V2X communication. As shown in FIG. 2, currently, the V2X may communicate with each other by using a straight-through link. To be specific, the vehicles (that is, a terminal device located on the vehicle, the vehicle terminal device for short) and the X (that is, the terminal device located on the X) may directly communicate with each other through the straight-through link by using a resource configured by a network device, and the network device does not need to perform forwarding. FIG. 2 is a schematic diagram in which the V2X communicates with each other by busing the straight-through link.

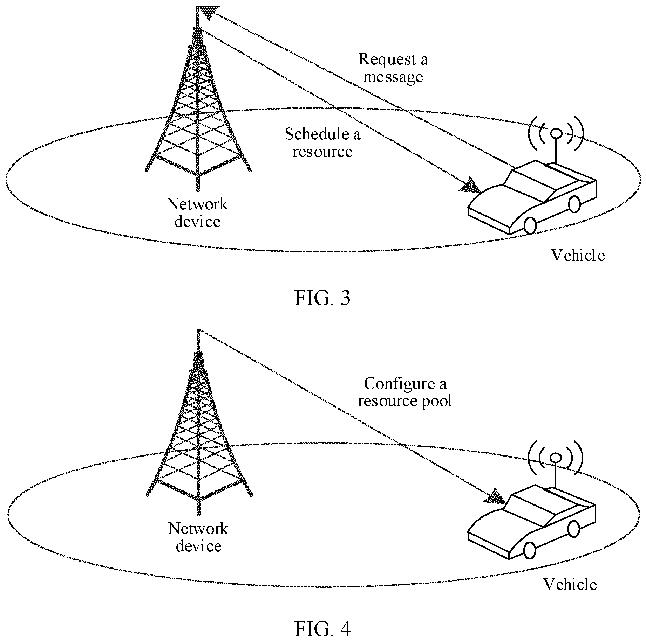

When the V2X communicates with each other by using the straight-through link, the communication of the V2X may alternatively be classified into two modes, one is a network device dynamic scheduling mode, and the other is a terminal autonomous resource selection mode. FIG. 3 is a schematic diagram 2 of a scenario of V2X communication. FIG. 4 is a schematic diagram 3 of a scenario of V2X communication. The vehicles are used as an example. As shown in FIG. 3, when the V2X communicates with each other by using the network device dynamic scheduling mode, the network device may dynamically or semi-dynamically schedule a resource for the vehicle terminal device based on a request message sent by the vehicle terminal device. In this way, the vehicle terminal device may communicate with the terminal device located on the X through the straight-through link by using the resource scheduled by the network device. As shown in FIG. 4, when the V2X communicates with each other by using the terminal autonomous resource selection mode, the network device may configure a resource pool for the vehicle terminal device through a system information block (system information block, SIB) message or radio resource control (radio resource control, RRC) signaling, or pre-configure a resource pool that is on the terminal device. In this way, the vehicle terminal device may obtain the resource from the resource pool and communicate with the terminal device located on the X through the straight-through link. During specific implementation, the vehicle terminal device may obtain the resource from the resource pool by using a random selection method or a method based on a listening reservation mechanism.

Currently, when the V2X communicates with each other by using the straight-through link, how to implement repeat transmission of data is a problem that urgently needs to be resolved.

In consideration of the foregoing problems, this application provides a data transmission method. A first terminal device may send n media access control (media access control, MAC) protocol data units (protocol data unit, PDU) carrying same to-be-sent data in a same PDCP entity, to a second terminal device through the straight-through link by using n different carriers based on first information that is sent by the network device and that is used to instruct the first terminal device to transmit the same to-be-sent data of a same packet data convergence protocol (packet data convergence protocol, PDCP) entity by using n logical channels, to repeatedly send the same to-be-sent data to the second terminal device through the straight-through link. In this application, when the first terminal device is a terminal device that is in the V2X and that is located on the vehicle, the second terminal device may be a terminal device that is in the V2X and that is located on the X. When the first terminal device is the terminal device that is in the V2X and that is located on the X, the second terminal device may be the terminal device that is in the V2X and that is located on the vehicle.

It should be noted that the data transmission method provided in this application includes but is not limited to an application scenario of the V2X. All scenarios, for example, an application scenario of device to device (device to device, D2D) and an application scenario of machine to machine (machine to machine, M2M), related to communicating through the straight-through link can use the data transmission method provided in this application. This is not described again.

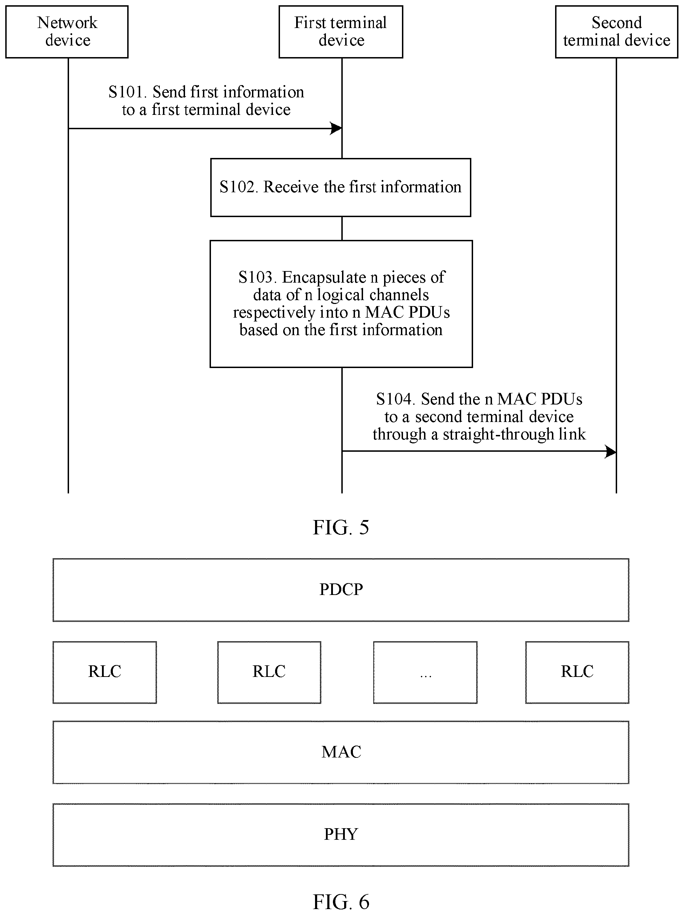

FIG. 5 is a signaling flowchart of a data transmission method according to this application. This embodiment relates to a process in which a first terminal device repeatedly transmits same to-be-sent data of a same PDCP entity to a second terminal device based on first information that is used to instruct the first terminal device to transmit the same to-be-sent data of the same PDCP entity by using n logical channels. As shown in FIG. 5, the method may include the following steps.

S101. A network device sends first information to the first terminal device.

The first information is used to instruct the first terminal device to transmit the same to-be-sent data of the same packet data convergence protocol PDCP entity by using the n logical channels, and the first information includes a first element; and the first element includes one or more of the following identifiers: a data priority identifier of the to-be-sent data, an identifier of a service type to which the to-be-sent data belongs, an identifier of a quality of service flow to which the to-be-sent data belongs, a destination address identifier of the to-be-sent data, an identifier of a logical channel group in which the n logical channels are located, n carrier identifiers corresponding to the n logical channels, and an identifier of the PDCP entity, where n is a positive integer greater than 1. A value of n is not limited in this embodiment, for example, n may be 2.

S102. The first terminal device receives the first information.

S103. The first terminal device encapsulates n pieces of data of n logical channels respectively into n MAC PDUs based on the first information.

The n pieces of data all include the same to-be-sent data of the same PDCP entity.

S104. The first terminal device sends the n MAC PDUs to a second terminal device through a straight-through link.

The n MAC PDUs use n carrier bearers.

In this embodiment, the network device may activate, through the first information, the first terminal device to repeatedly transmit the same to-be-sent data of the same PDCP entity to the second terminal device, thereby effectively controlling the repeat transmission of data of the first terminal device. In a specific implementation, the network device may carry the first information in a MAC control element (control element, CE) of the MAC PDUs and send the first information to the first terminal device, the network device may carry the first information in RRC signaling and send the first information to the first terminal device, or the network device may carry the first information in a system information block (system information block, SIB) message and sends the first information to the first terminal device.

FIG. 6 is a schematic structural diagram of a protocol stack according to this application. As shown in FIG. 6, in this embodiment, after receiving the first information, the first terminal device may separately send the same to-be-sent data of the same PDCP entity to n radio link control protocol (radio link control, RLC) entities based on the first information. Each RLC entity corresponds to a logical channel. To be specific, the first terminal device may separately send the same to-be-sent data of the same PDCP entity to the n logical channels having one-to-one correspondence with the n RLC entities. In this case, the n pieces of data of the n logical channels all include the same to-be-sent data of the same PDCP entity.

Then, a MAC layer of the first terminal device may encapsulate the n pieces of data of the n logical channels respectively into the n MAC PDUs. The n pieces of data respectively come from the n logical channels, and data of different logical channels in the n logical channels is encapsulated into different MAC PDUs. It may be understood that encapsulating one piece of data into one MAC PDU refers to that the MAC PDU includes the data. Finally, a physical layer (physical layer, PHY) layer of the first terminal device may send the n MAC PDUs to the second terminal device through the straight-through link by using n carriers, to transmit the same to-be-sent data of the same PDCP entity to the second terminal device for n times, thereby improving data transmission reliability and reducing data transmission latency. In this manner, the network device may activate, through the first information, the first terminal device to transmit the same to-be-sent data of the same PDCP entity by using the n logical channels, thereby effectively controlling the repeat transmission of data of the first terminal device.

In the data transmission method provided in this application, after receiving the first information that is sent by the network device and that is used to instruct the first terminal device to transmit the same to-be-sent data of the same PDCP entity by using the n logical channels, the first terminal device may send the n MAC PDUs carrying the same to-be-sent data in the same PDCP entity, to the second terminal device through the straight-through link by using n different carriers, to repeatedly send the same to-be-sent data to the second terminal device through the straight-through link.

The same to-be-sent data included in the n pieces of data of the n logical channels of the first terminal device may be determined based on an identifier carried by the first element. The following makes descriptions by using some examples.

For example, the to-be-sent data in the PDCP entity of the first terminal device comes from an upper layer (that is, above an access layer). Currently, the upper layer usually allocates a data priority to the data and sends the data and the data priority to the PDCP entity. To be specific, all the to-be-sent data in the PDCP entity has corresponding data priorities. Therefore, the first element may include a data priority identifier of the to-be-sent data, so that the first terminal device is activated, through the data priority identifier, to repeatedly transmit the to-be-sent data corresponding to the data priority. In this way, the first terminal device may repeatedly transmit the to-be-sent data corresponding to the data priority by using the embodiment shown in FIG. 5. In this manner, the network device may activate the first terminal device to repeatedly transmit to-be-sent data of a data priority on the PDCP entity. In this implementation, the n pieces of data of the n logical channels all include the to-be-sent data of a data priority on the PDCP entity.

For example, services of a plurality of different types may exist on the first terminal device. The services of the different types may be services corresponding to different receive ends and/or different transmit ends. For example, the services of the different types may be a V2V service, a V2P service, a V2I service, a P2V service, a P2P service, a P2I service, and the like. Alternatively, the services of the different types may also be distinguished by using an application layer identifier (for example, an ITS-AID: ITS application identifier or a PSID: provider service identifier) carried by an application layer or delivered by the upper layer (above the application layer). Therefore, the first element may include the identifier of the service type to which the to-be-sent data belongs, so that the first terminal device is activated, through the identifier of the service type to which the to-be-sent data belongs, to repeatedly transmit the to-be-sent data corresponding to the service type. In this way, the first terminal device may repeatedly transmit the to-be-sent data corresponding to the service type by using the embodiment shown in FIG. 5. In this manner, the network device may activate the first terminal device to repeatedly transmit to-be-sent data that is on the PDCP entity and that corresponds to a service type. In this implementation, the n pieces of data of the n logical channels all include the to-be-sent data that is on the PDCP entity and that corresponds to a service type.

For example, when the first terminal device communicates with the second terminal device by using the straight-through link, there is a correspondence between the quality of service flow (Qos flow) to which the to-be-sent data belongs and a Qos parameter. The Qos parameter may include at least one of a latency, reliability, and a priority. Therefore, the first element may include the identifier of the Qos flow to which the to-be-sent data belongs, so that the first terminal device is activated, through the identifier of the Qos flow to which the to-be-sent data belongs, to repeatedly transmit the to-be-sent data corresponding to the Qos flow. In this way, the first terminal device may repeatedly transmit the to-be-sent data corresponding to the Qos flow by using the embodiment shown in FIG. 5. In this manner, the network device may activate the first terminal device to repeatedly transmit to-be-sent data of a Qos flow on the PDCP entity. In this implementation, the n pieces of data of the n logical channels all include the to-be-sent data of a Qos flow on the PDCP entity.

For example, when the first terminal device communicates with different second terminal devices, destination addresses corresponding to the to-be-sent data are different. Therefore, the first element may include the destination address identifier of the to-be-sent data, so that the first terminal device is activated, through the destination address identifier of the to-be-sent data, to repeatedly transmit to-be-sent data sent to the destination address. In this way, the first terminal device may repeatedly transmit the to-be-sent data sent to the destination address by using the embodiment shown in FIG. 5. In this manner, the network device may activate the first terminal device to repeatedly transmit to-be-sent data to be sent to a second terminal device. In this implementation, the n pieces of data of the n logical channels all include the to-be-sent data that is on the PDCP entity and that is to be sent to a second terminal device.

Optionally, when the first terminal device communicates with the second terminal device in a broadcast message manner, there may be a mapping relationship between the destination address and the service type. Therefore, the first element may include the destination address identifier of the to-be-sent data, so that the first terminal device is activated, through the destination address identifier of the to-be-sent data, to repeatedly transmit to-be-sent data that is sent to the second terminal device and that is of a service type. In this way, the first terminal device may repeatedly transmit, by using the embodiment shown in FIG. 5, the to-be-sent data that is sent to the second terminal device and that is of a service type. In this manner, the network device may activate the first terminal device to repeatedly transmit the to-be-sent data that is sent to the second terminal device and that is of a service type. In this implementation, the n pieces of data of the n logical channels all includes the to-be-sent data that is on the PDCP entity and that is to be sent to a type of the second terminal device.

For example, the first element may include the identifier of the PDCP entity, so that the first terminal device is activated, through the identifier of the PDCP entity, to repeatedly transmit the to-be-sent data on the PDCP entity. In this way, the first terminal device may repeatedly transmit all the to-be-sent data on the PDCP entity by using the embodiment shown in FIG. 5. In this manner, the network device may activate the first terminal device to repeatedly transmit all the to-be-sent data on a PDCP entity. In this implementation, the n pieces of data of the n logical channels all includes all the to-be-sent data on a PDCP entity.

For example, currently, the network device may configure a logical channel group for a terminal device in a connection state through RRC signaling. Therefore, the first element may include the logical channel group identifier where the n logical channels are located, so that the first terminal device is activated, through the logical channel group identifier where the n logical channels are located, to repeatedly transmit the to-be-sent data on a PDCP entity by using the n logical channels of the logical channel group. In this way, by using the embodiment shown in FIG. 5, the first terminal device may repeatedly transmit the to-be-sent data on a PDCP entity by using the n logical channels of the logical channel group. In this manner, the network device may activate the first terminal device to repeatedly transmit the to-be-sent data on a PDCP entity by using the n logical channels. In this implementation, the n pieces of data of the n logical channels all includes all the to-be-sent data on a PDCP entity.

It should be noted that if a quantity of the logical channels included in the logical channel group is greater than a multiple of n, for example n is 2, assuming that the quantity of the logical channels included in the logical channel group is 5, the first terminal device may repeatedly transmit the to-be-sent data on one PDCP entity by using two logical channels of the logical channel group and repeatedly transmit the to-be-sent data on another PDCP entity by using two logical channels in the rest three logical channels of the logical channel group.

The first element includes n carrier identifiers, so that the first terminal device is activated, through the n carrier identifiers, to repeatedly transmit the to-be-sent data on a PDCP entity by using the n logical channels. In this way, by using the embodiment shown in FIG. 5, the first terminal device repeatedly transmits the to-be-sent data on a PDCP entity through the n carriers corresponding to the n carrier identifiers by using the n logical channels. In this manner, the network device may activate the first terminal device to repeatedly transmit the to-be-sent data on a PDCP entity by using the n logical channels. In this implementation, the n pieces of data of the n logical channels all includes all the to-be-sent data on a PDCP entity. In this scenario, the n logical channels used when the first terminal device repeatedly transmit the to-be-sent data on the PDCP entity is not limited in this application.

For example, the first element may further include the data priority identifier of the to-be-sent data and the n carrier identifiers, so that the first terminal device is activated, through the data priority identifier and the n carrier identifiers, to repeatedly transmit the to-be-sent data corresponding to the data priority through the n carriers corresponding to the n carrier identifiers. In this way, the first terminal device may repeatedly transmit the to-be-sent data corresponding to the data priority through the n carriers corresponding to the n carrier identifiers by using the embodiment shown in FIG. 5. In this manner, the network device may activate the first terminal device to repeatedly transmit the to-be-sent data on a PDCP entity by using the n logical channels. In this implementation, the n pieces of data of the n logical channels all includes the to-be-sent data of a data priority on the PDCP entity.

In an implementation, the network device and the first terminal device preset a correspondence between the data priority and the n carriers. Therefore, the network device may activate, by using the first information of the data priority identifier of the to-be-sent data carried by the first element, the first terminal device to repeatedly transmit the to-be-sent data corresponding to the data priority through the n carriers corresponding to the data priority. The correspondence that is preset by the first terminal device and that is between the data priority and the n carriers may be dynamically or semi-dynamically configured by the network device through the RRC signaling, broadcast by the network device to the first terminal device by using the SIB message, pre-configured on the first terminal device, or sent by the network device to the first terminal device by using another manner. This is not limited thereto.

For example, the first element may further include the data priority identifier of the to-be-sent data, the logical channel group identifier where the n logical channels are located, and the n carrier identifiers, so that the first terminal device is activated, through the identifiers, to repeatedly transmit the to-be-sent data corresponding to the data priority through the n carriers corresponding to the n carrier identifiers by using the n logical channels of the logical channel group. In this way, by using the embodiment shown in FIG. 5, the first terminal device may repeatedly transmit the to-be-sent data corresponding to the data priority through the n carriers corresponding to the n carrier identifiers by using the n logical channels of the logical channel group. In this manner, the network device may activate the first terminal device to repeatedly transmit the to-be-sent data on a PDCP entity by using the n logical channels. In this implementation, the n pieces of data of the n logical channels all includes the to-be-sent data of a data priority on the PDCP entity.

It should be noted that the examples listed above are merely examples. In specific implementation, the first element may activate, through a combination of any identifiers listed above, the first terminal device to transmit the same to-be-sent data of the same PDCP entity by using the n logical channels. An implementation and a technical effect thereof are similar, and details are not described herein again. In addition, when the first element carries a plurality of identifiers, the plurality of identifiers may be identifiers of different types. For example, the first element may carry the data priority identifier of the to-be-sent data and the destination address identifier of the to-be-sent data at the same time. The plurality of identifiers may alternatively be identifiers of a same type. For example, the first element may carry a data priority identifier 1 and a data priority identifier 2. An implementation and a technical effect thereof are similar, and details are not described herein again.

In a possible manner, in some cases, the first information may be used to instruct the first terminal device to transmit the same to-be-sent data of the same PDCP entity by using the n logical channels; and in some other cases, the first information may be used to instruct the first terminal device to stop transmitting the same to-be-sent data of the same PDCP entity by using the n logical channels. In this manner, the first information may enable, by using this manner, the network device to flexibly activate or deactivate, through the first information, the first terminal device to transmit the same to-be-sent data of the same PDCP entity by using the n logical channels, thereby effectively controlling the repeat transmission of data of the first terminal device.

In specific implementation, the first information may further include a second element, to implement the first information through the second element. To be specific, when the second element is a first value, the first information is used to instruct the first terminal device to transmit the same to-be-sent data of the same PDCP entity by using the n logical channels. When the first element is a second value, the first information is used to instruct the first terminal device to stop transmitting the same to-be-sent data of the same PDCP entity by using the n logical channels. For example, when the first value is 0, the second value may be 1. When the first value is 1, the second value may be 0.

For example, by using an example in which the first value is 0 and the second value is 1, it is assumed that the first element includes the data priority identifier of the to-be-sent data. When a value of the second element is 0, the first information is used to activate the first terminal device to repeatedly transmit the to-be-sent data corresponding to the data priority. When the value of the second element is 1, the first information is used to deactivate the first terminal device to skip repeatedly transmitting the to-be-sent data corresponding to the data priority. To be specific, the first information is used to activate the first terminal device to stop repeatedly transmitting the to-be-sent data corresponding to the data priority by using the n logical channels, but still transmit the to-be-sent data corresponding to the data priority by using one logical channel.

Alternatively, when an accumulated quantity of times of receiving the first information by the first terminal device is a value of a first type, the first information is used to instruct the first terminal device to transmit the same to-be-sent data of the same PDCP entity by using the n logical channels. When the accumulated quantity of times is a value of a second type, the first information is used to instruct the first terminal device to stop transmitting the same to-be-sent data of the same PDCP entity by using the n logical channels. For example, the value of the first type may be an odd number and the value of the second type may be an even number, or the value of the first type may be the even number and the value of the second type may be the odd number.

For example, by using an example in which the value of the first type is the odd number and the value of the second type is the even number, assuming that the accumulated quantity of times of receiving the first information by the first terminal device is 1, the first information is used to instruct the first terminal device to transmit the same to-be-sent data of the same PDCP entity by using the n logical channels. Assuming that the accumulated quantity of times of receiving the first information by the first terminal device is 2, the first information is used to deactivate the first terminal device to skip repeatedly transmitting the to-be-sent data corresponding to the data priority. To be specific, the first information is used to activate the first terminal device to stop repeatedly transmitting the to-be-sent data corresponding to the data priority by using the n logical channels, but still transmit the to-be-sent data corresponding to the data priority by using one logical channel.

Alternatively, the first element may include a bitmap, and one bit in the bitmap corresponds to one identifier in the first element. To be specific, an identifier carried by the first element is indicated by a fixed bit. By using an example in which the first element includes the data priority identifier of the to-be-sent data, it is assumed that there are eight data priorities in total, and are separately data priority 0 to data priority 7. As shown in Table 1, in the bitmap, each bit may correspond to a data priority successively according to an ascending order of the data priorities. Certainly, each bit may also correspond to a data priority successively according to a descending order of the data priorities, and details are not described herein again.

**Table 1**

| | | | | | | | |
|---|---|---|---|---|---|---|---|
| Data priority 0 | Data priority 1 | Data priority 2 | Data priority 3 | Data priority 4 | Data priority 5 | Data priority 6 | Data priority 7 |

When a bit is the first value, the bit may instruct the first terminal device to transmit the to-be-sent data of the data priority corresponding to the bit by using the n logical channels. When a bit is the second value, the bit may instruct the first terminal device to stop transmitting the to-be-sent data of the data priority corresponding to the bit by using the n logical channels. For example, when the first value is 0, the second value may be 1. When the first value is 1, the second value may be 0.

For example, by using a bitmap format as shown in FIG. 1 as an example, it is assumed that the first element of the first information is shown in Table 2.

**Table 2**

| | | | | | | | |
|---|---|---|---|---|---|---|---|
| 0 | 1 | 1 | 0 | 1 | 0 | 1 | 1 |

The first information is used to activate the first terminal device to repeatedly transmit the to-be-sent data of the data priority 1, the data priority 2, the data priority 4, the data priority 6, and the data priority 7. To be specific, the first terminal device needs to transmit the to-be-sent data of the data priority 1 by using the n logical channels, transmit the to-be-sent data of the data priority 2 by using the n logical channels, transmit the to-be-sent data of the data priority 4 by using the n logical channels, transmit the to-be-sent data of the data priority 6 by using the n logical channels, and transmit the to-be-sent data of the data priority 7 by using the n logical channels.

In a possible manner, when the first information is used to instruct the first terminal device to transmit the same to-be-sent data of the same PDCP entity by using the n logical channels, the first information may further include a third element. The third element is used to instruct the first terminal device to transmit a maximum time length of the same to-be-sent data of the same PDCP entity by using the n logical channels. To be specific, after receiving the first information carrying the third element, the first terminal device may transmit the same to-be-sent data of the same PDCP entity by using the n logical channels within the maximum time length, and automatically stop transmitting the same to-be-sent data of the same PDCP entity by using the n logical channels after the maximum time length is passed. In this manner, the network device may semi-dynamically activate the first terminal device to transmit the same to-be-sent data of the same PDCP entity by using the n logical channels. In specific implementation, the first terminal device may identify whether the maximum time length is passed in a manner of starting up a timer, and details are not described herein again.

In this implementation, when the first information is used to instruct the first terminal device to stop transmitting the same to-be-sent data of the same PDCP entity by using the n logical channels, the first information may also include the third element. In this case, the third element is used to instruct the first terminal device to stop transmitting the maximum time length of the same to-be-sent data of the same PDCP entity by using the n logical channels. To be specific, after receiving the first information carrying the third element, the first terminal device may stop transmitting the same to-be-sent data of the same PDCP entity by using the n logical channels within the maximum time length, and continue transmitting the same to-be-sent data of the same PDCP entity by using the n logical channels after the maximum time length is passed. In this manner, the network device may semi-dynamically deactivate the first terminal device to transmit the same to-be-sent data of the same PDCP entity by using the n logical channels.

In another possible implementation, the first information may further only include the third element, so that the first terminal device is instructed, through the third element, to transmit the maximum time length of the same to-be-sent data of the same PDCP entity by using the n logical channels, and the first terminal device is activated to transmit the same to-be-sent data of the same PDCP entity by using the n logical channels. In this manner, the network device may activate the first terminal device to repeatedly transmit the to-be-sent data on a PDCP entity by using the n logical channels while reducing signaling overheads. In this implementation, the n pieces of data of the n logical channels all includes the to-be-sent data of a data priority on the PDCP entity.

Because when the first terminal device communicates with the second terminal device through the straight-through link, the first terminal device is responsible for setting up and maintaining a logical channel of the first terminal device, the network device cannot instruct, by configuring the correspondence that is between the PDCP entity and the logical channel for the first terminal device, which logical channels are to be used by the first terminal device to repeatedly transmit the data. Therefore, the network device may actively send the first information to the first terminal device based on a using condition of a network resource, and flexibly activate or deactivate the first terminal device to transmit the same to-be-sent data of the same PDCP entity by using the n logical channels, thereby effectively controlling the repeat transmission of the data of the first terminal device. For example, by using an example in which the first element carries the data priority identifier, when congestion occurs on the network resource, the network device may send the first information that is used to instruct the first terminal device to stop transmitting the to-be-sent data of one or more data priorities by using the n logical channels, to the first terminal device. When vacancy occurs on the network resource, the network device may send the first information that is used to instruct the first terminal device to transmit the to-be-sent data of the one or more data priorities by using the n logical channels, to the first terminal device.

To be specific, the first information may be actively sent by the network device to the first terminal device based on the using condition of the network resource. Optionally, the first information may also be sent by the network device to the first terminal device based on a request of the first terminal device. When the first information is sent by the network device to the first terminal device based on the request of the first terminal device, before S101, the method may further include:
sending, by the first terminal device, second information to the network device, where the second information is used to request to activate the first terminal device to transmit the same to-be-sent data of the same PDCP entity by using the n logical channels or used to request to deactivate the first terminal device to transmit the same to-be-sent data of the same PDCP entity by using the n logical channels.

Specifically, when the first terminal device needs to send the to-be-sent data to the second terminal device, the first terminal device may send the second information that is used to request to activate the first terminal device to transmit the same to-be-sent data of the same PDCP entity by using the n logical channels, to the network device, to request the network device to activate the first terminal device to transmit the same to-be-sent data of the same PDCP entity by using the n logical channels. Correspondingly, after receiving the second information, the network device may determine, based on the second information and the using condition of the network resource, whether to activate the first terminal device to transmit the same to-be-sent data of the same PDCP entity by using the n logical channels. When determining to activate the first terminal device to transmit the same to-be-sent data of the same PDCP entity by using the n logical channels, the network device may send the first information that is used to instruct the first terminal device to transmit the same to-be-sent data of the same PDCP entity by using the n logical channels, to the first terminal device. Details are not described herein again.

When the first terminal device needs to stop repeatedly sending a piece of to-be-sent data, the first terminal device may send the second information that is used to request to deactivate the first terminal device to transmit the same to-be-sent data of the same PDCP entity by using the n logical channels, to the network device, to request the network device to deactivate the first terminal device to transmit the same to-be-sent data of the same PDCP entity by using the n logical channels. Correspondingly, after receiving the second information, the network device may determine, based on the second information, whether to deactivate the first terminal device to transmit the same to-be-sent data of the same PDCP entity by using the n logical channels. When determining to deactivate the first terminal device to transmit the same to-be-sent data of the same PDCP entity by using the n logical channels, the network device may send the first information that is used to instruct the first terminal device to stop transmitting the same to-be-sent data of the same PDCP entity by using the n logical channels, to the first terminal device. Details are not described herein again.

In specific implementation, the second information may include one or more of the following: a data priority identifier of the to-be-sent data, an identifier of the service type to which the to-be-sent data belongs, an identifier of the quality of service flow to which the to-be-sent data belongs, a destination address identifier of the to-be-sent data, an identifier of the PDCP entity (for example, the PDCP entity in which the to-be-sent data is located), and a channel congestion degree corresponding to at least one logical channel in the n logical channels.

When determining to activate the first terminal device to transmit the same to-be-sent data of the same PDCP entity by using the n logical channels, the network device may send the first information that is used to instruct the first terminal device to transmit the same to-be-sent data of the same PDCP entity by using the n logical channels. When determining to deactivate the first terminal device to transmit the same to-be-sent data of the same PDCP entity by using the n logical channels, the network device may send the first information that is used to instruct the first terminal device to stopping transmitting the same to-be-sent data of the same PDCP entity by using the n logical channels.

Alternatively, the network device may also send the first information carrying a flag bit, and activate or deactivate the first terminal device to transmit the same to-be-sent data of the same PDCP entity by using the n logical channels. When the flag bit is the first value, the first information is used to activate the first terminal device to transmit the same to-be-sent data of the same PDCP entity by using the n logical channels. When the flag bit is the second value, the first information is used to deactivate the first terminal device to transmit the same to-be-sent data of the same PDCP entity by using the n logical channels. To be specific, the first information is used to activate the first terminal device to stop repeatedly transmitting the to-be-sent data by using the n logical channels, but still transmit the to-be-sent data by using one logical channel. For example, when the first value is 1, the second value is 0, and when the first value is 0, the second value is 1.

Alternatively, the network device may also send the first information in a form of a MAC CE, to activate or deactivate, through the different MAC CEs, the first terminal device to transmit the same to-be-sent data of the same PDCP entity by using the n logical channels. When the MAC PDU sent by the network device to a terminal device includes a first MAC CE, the first information is used to activate the first terminal device to transmit the same to-be-sent data of the same PDCP entity by using the n logical channels. When the MAC PDU sent by the network device to the terminal device includes a second MAC CE, the first information is used to deactivate the first terminal device to transmit the same to-be-sent data of the same PDCP entity by using the n logical channels.

Alternatively, the network device may also activate or deactivate, through different values of the same MAC CE, the first terminal device to transmit the same to-be-sent data of the same PDCP entity by using the n logical channels. When the MAC CE is the first value, the MAC CE is used to instruct the first terminal device to transmit the same to-be-sent data of the same PDCP entity by using the n logical channels. When the MAC CE is the second value, the MAC CE is used to instruct the first terminal device to stop transmitting the same to-be-sent data of the same PDCP entity by using the n logical channels. For example, when the first value is 0011, the second value is 0100.

Alternatively, the first information may also activate or deactivate, by carrying the flag bit and the third element, or by using a manner of using the different MAC CEs and the third element through a combination of different values of the same MAC CE and the third element, the first terminal device to transmit the same to-be-sent data of the same PDCP entity by using the n logical channels, and activate or deactivate the first terminal device to transmit the maximum time length of the same to-be-sent data of the same PDCP entity by using the n logical channels. Details are not described herein again.

It should be noted that although the foregoing examples introduce and describe the first information by using an example of a scenario in which the network device sends the first information to the first terminal device based on the request of the first terminal device. However, a person skilled in the art may understand that the first information is also applicable to a scenario in which the network device actively sends the first information to the first terminal device based on the using condition of the network resource. Details are not described herein again.

In this manner, a manner in which the network device activates the first terminal device to transmit the same to-be-sent data of the same PDCP entity by using the n logical channels is flexible and diverse, enlarging a using scenario on a basis of effectively controlling the repeat transmission of the data of the first terminal device.

By using the data transmission method provided in this application, the network device may flexibly activate or deactivate, through the first information, the first terminal device to transmit the same to-be-sent data of the same PDCP entity by using the n logical channels, thereby effectively controlling the repeat transmission of the data of the first terminal device on the straight-through link.

As described in the foregoing embodiments, when the first terminal device communicates with the second terminal device through the straight-through link, the first terminal device is responsible for setting up and maintaining the logical channel of the first terminal device. Correspondingly, the second terminal device is responsible for setting up and maintaining a logical channel of the second terminal device. Therefore, when repeatedly transmitting the same to-be-sent data of the same PDCP entity to the second terminal device by using the n logical channels, the first terminal device needs to notify the second terminal device of the correspondence in which the n logical channels correspond to the same PDCP entity, so that after receiving the n pieces of data (including the same to-be-sent data) of the n logical channels, the second terminal device may deliver the n pieces of data to the same PDCP entity for processing, to implement repeat transmission of data between the first terminal device and the second terminal device.

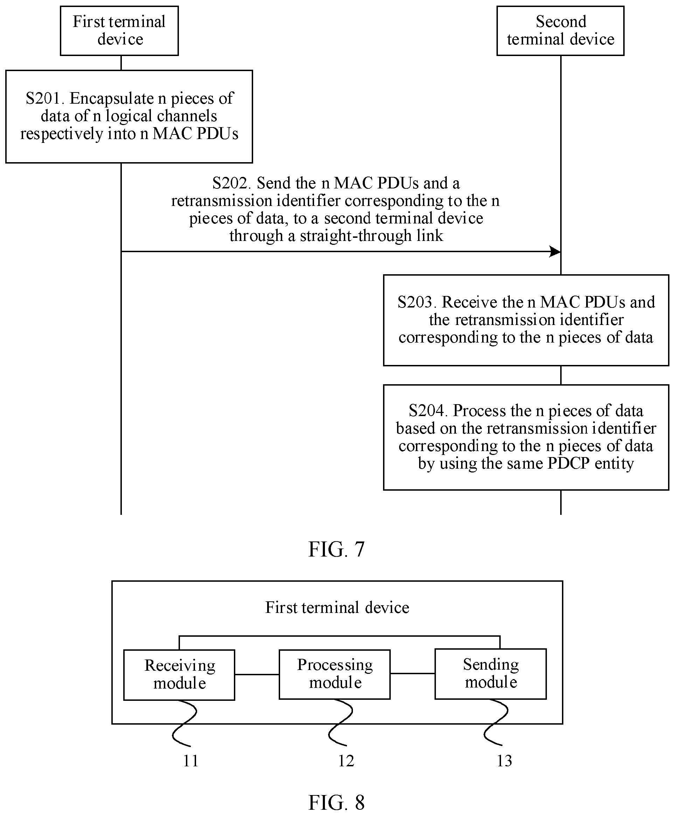

FIG. 7 is a signaling flowchart of another data transmission method according to this application. This embodiment relates to a process in which the first terminal device notifies the second terminal device of the correspondence in which the n logical channels correspond to the same PDCP entity. As shown in FIG. 7, the method may include the following steps.

S201. A first terminal device encapsulates n pieces of data of n logical channels respectively into n MAC PDUs.

S202. The first terminal device sends the n MAC PDUs and a retransmission identifier corresponding to the n pieces of data, to a second terminal device through a straight-through link.

The n MAC PDUs use n carrier bearers.

S203. The second terminal device receives the n MAC PDUs and the retransmission identifier corresponding to the n pieces of data.

S204. The second terminal device processes the n pieces of data based on the retransmission identifier corresponding to the n pieces of data by using the same PDCP entity.

In this embodiment, the first terminal device may carry the retransmission identifier corresponding to the n pieces of data in the n MAC PDUs, so that the retransmission identifier corresponding to the n pieces of data and the n pieces of data are sent to the second terminal device, the retransmission identifier corresponding to the n pieces of data may also be sent to the second terminal device independently, or the like.

Optionally, the first terminal device may send the retransmission identifier and the to-be-sent data to the n RLC entities while sending the same to-be-sent data of the same PDCP entity separately to the n RLC entities. In this way, the n pieces of data of the n logical channels separately corresponding to the n RLC entities may all include the same to-be-sent data of the same PDCP entity and the retransmission identifier of the n pieces of data. Then, the first terminal device may encapsulate the n pieces of data of the n logical channels separately into the n MAC PDUs, to send the to-be-sent data and the retransmission identifier of the to-be-sent data to the second terminal device through the n MAC PDUs. In this way, after receiving the n MAC PDUs, the second terminal device may deliver the n pieces of data including the same to-be-sent data, to the same PDCP entity based on the retransmission identifier carried in the n pieces of data for processing.

In specific implementation, an RLC entity of the first terminal device may encapsulate the retransmission identifier into a header of an RLC layer data packet. To be specific, data included in the logical channel includes the retransmission identifier. In this way, an RLC entity of the second terminal device may determine, by parsing the header of the n pieces of data, a PDCP entity to which the data is delivered. The retransmission identifier may include one or more of the following: an identifier of the PDCP entity to which the to-be-sent data belongs, a data priority identifier of the to-be-sent data, an identifier of a quality of service flow of the to-be-sent data, a destination address identifier of the to-be-sent data, an identifier of a service type corresponding to the to-be-sent data, and the like.

Optionally, the first terminal device may carry the retransmission identifier in a MAC CE of at least one MAC PDU of the n MAC PDUs, and send the retransmission identifier to the second terminal device, the first terminal device may send the retransmission identifier to the second terminal device, or the first terminal device may send the retransmission identifier to the second terminal device by carrying the retransmission identifier in a single message (for example, a straight-through link SIB message). Alternatively, the first terminal device may carry a part of the retransmission identifier in a MAC CE of at least one MAC PDU of the n MAC PDUs and send the part of the retransmission identifier to the second terminal device, and carry another part of information of the retransmission identifier in the at least one MAC PDU and include the another part of the information of the retransmission identifier in a subheader corresponding to the MAC SDU in which the to-be-sent data is located, and send the another part of the information of the retransmission identifier to the second terminal device. In this implementation, the retransmission identifier may include an identifier of the n logical channels and/or an identifier of the RLC entity separately corresponding to the n logical channels. For example, the retransmission identifier may include an identifier of a logical channel 1 and an identifier of a logical channel 2. After receiving two MAC PDUs separately encapsulating data of the two logical channels, the second terminal device may deliver the data of the logical channel 1 and the data of the logical channel 2 to the same PDCP entity for processing.

Optionally, the first terminal device and the second terminal device preset the n logical channels that are used when the first terminal device transmits the same to-be-sent data of the same PDCP entity. Therefore, after receiving the n MAC PDUs separately encapsulating the data of the n logical channels, the second terminal device may deliver the data of the n logical channels to the same PDCP entity based on the preset information for processing. In specific implementation, the network device may configure the n logical channels that are used when the first terminal device transmits the same to-be-sent data of the same PDCP entity, for the first terminal device and the second terminal device through RRC signaling and an SIB message. Alternatively, the n logical channels that are used when transmitting the same to-be-sent data of the same PDCP entity may be pre-configured on the first terminal device and the second terminal device. The pre-configuration may be pre-configuring by the network device on the terminal device or pre-configuring by the terminal device on the terminal device at delivery.

In this implementation, the first terminal device may retransmit the data by using the n preset logical channels continuously when communicating with the second terminal device. The first terminal device may also send the retransmission identifier to the second terminal device when retransmitting the data by using the n preset logical channels, to instruct, through the retransmission identifier, the first terminal device to transmit the same to-be-sent data of the same PDCP entity by using the n preset logical channels, or instruct the first terminal device to stop transmitting the same to-be-sent data of the same PDCP entity by using the n preset logical channels. In this way, the second terminal device may determine, based on the retransmission identifier, whether to deliver the data of the n logical channels to the same PDCP entity for processing. In this manner, the first terminal device may flexibly transmit the data by using the n preset logical channels, improving data transmission efficiency.

A specific implementation of the retransmission identifier is not limited in this embodiment. For example, the retransmission identifier may only carry a flag bit of a bit, so that the first terminal device is instructed, through the flag bit, to transmit the same to-be-sent data of the same PDCP entity by using the n preset logical channels, or the first terminal device is instructed to stop transmitting the same to-be-sent data of the same PDCP entity by using the n preset logical channels. For example, when the flag bit is 0, the retransmission identifier may instruct the first terminal device to transmit the same to-be-sent data of the same PDCP entity by using the n preset logical channels. When the flag bit is 1, the retransmission identifier may instruct the first terminal device to stop transmitting the same to-be-sent data of the same PDCP entity by using the n preset logical channels. Alternatively, when the flag bit is 1, the retransmission identifier may instruct the first terminal device to transmit the same to-be-sent data of the same PDCP entity by using the n preset logical channels. When the flag bit is 0, the retransmission identifier may instruct the first terminal device to stop transmitting the same to-be-sent data of the same PDCP entity by using the n preset logical channels.

Optionally, the first terminal device may carry the retransmission identifier in a MAC CE of at least one MAC PDU of the n MAC PDUs, and send the retransmission identifier to the second terminal device, the first terminal device may carry the retransmission identifier in the at least one MAC PDU of the n MAC PDUs and include the retransmission identifier in a subheader corresponding to the MAC SDU in which the to-be-sent data is located and send the retransmission identifier to the second terminal device, the first terminal device may send the retransmission identifier to the second terminal device by carrying the retransmission identifier in a single message (for example, a straight-through link SIB message), or the like.

By using the data transmission method provided in this application, the first terminal device may send n MAC PDUs carrying the same to-be-sent data in the same PDCP entity and the retransmission identifier corresponding to the n pieces of data, to the second terminal device through the straight-through link by using n different carriers, so that the second terminal device may process, based on the retransmission identifier by using the same PDCP entity, data of the same to-be-sent data included in the n MAC PDUs, to repeatedly send the same to-be-sent data to the second terminal device through the straight-through link.

FIG. 8 is a schematic structural diagram of a terminal device according to this application. As shown in FIG. 8, the terminal device is a first terminal device, and the first terminal device may include a receiving module 11, a processing module 12, and a sending module 13.

The receiving module 11 is configured to receive first information sent by a network device, where the first information is used to instruct the first terminal device to transmit same to-be-sent data of a same PDCP entity by using n logical channels, and the first information includes a first element; and the first element includes one or more of the following identifiers: a data priority identifier of the to-be-sent data, an identifier of a service type to which the to-be-sent data belongs, an identifier of a quality of service flow to which the to-be-sent data belongs, a destination address identifier of the to-be-sent data, an identifier of a logical channel group in which the n logical channels are located, n carrier identifiers corresponding to the n logical channels, and an identifier of the PDCP entity, where n is a positive integer greater than 1. For example, the first information is carried in a MAC CE or radio resource control RRC signaling. The processing module 12 is configured to encapsulate n pieces of data of the n logical channels respectively into n MAC PDUs based on the first information, where the n pieces of data all include the to-be-sent data.

The sending module 13 is configured to send the n MAC PDUs to a second terminal device through a straight-through link, where the n MAC PDUs use n carrier bearers.

Optionally, in some embodiments, the first information further includes a second element. When the second element is a first value, the first information is used to instruct the first terminal device to transmit the same to-be-sent data of the same PDCP entity by using the n logical channels; and when the second element is a second value, the first information is used to instruct the first terminal device to stop transmitting the same to-be-sent data of the same PDCP entity by using the n logical channels.

Optionally, in some embodiments, that the first information is used to instruct the first terminal device to transmit the same to-be-sent data of the same packet data convergence protocol PDCP entity by using the n logical channels includes that the first information is used to activate the first terminal device to transmit the same to-be-sent data of the same packet data convergence protocol PDCP entity by using the n logical channels. For example, the quality of service flow to which the to-be-sent data belongs corresponds to reliability of the to-be-sent data. Alternatively, the identifier of the quality of service flow to which the to-be-sent data belongs corresponds to the reliability of the to-be-sent data.

Optionally, in some embodiments, the first element includes a bitmap, and one bit in the bitmap corresponds to one identifier.

Optionally, in some embodiments, the first information further includes a third element. The third element is used to instruct the first terminal device to transmit a maximum time length of the same to-be-sent data of the same PDCP entity by using the n logical channels.

Optionally, in some embodiments, the sending module 13 is further configured to send second information to the network device before the receiving module 11 receives the first information sent by the network device, where the second information is used to request to activate the first terminal device to transmit the same to-be-sent data of the same PDCP entity by using the n logical channels. For example, the second information includes one or more of the following: a data priority identifier of the to-be-sent data, an identifier of the service type to which the to-be-sent data belongs, an identifier of the quality of service flow to which the to-be-sent data belongs, a destination address identifier of the to-be-sent data, an identifier of the PDCP entity, and a channel congestion degree corresponding to at least one logical channel in the n logical channels.

The first terminal device provided in this application may perform the actions of the first terminal device that are shown in FIG. 5 and that are in the foregoing method embodiments. Implementation principles and technical effects thereof are similar, and details are not described herein again.

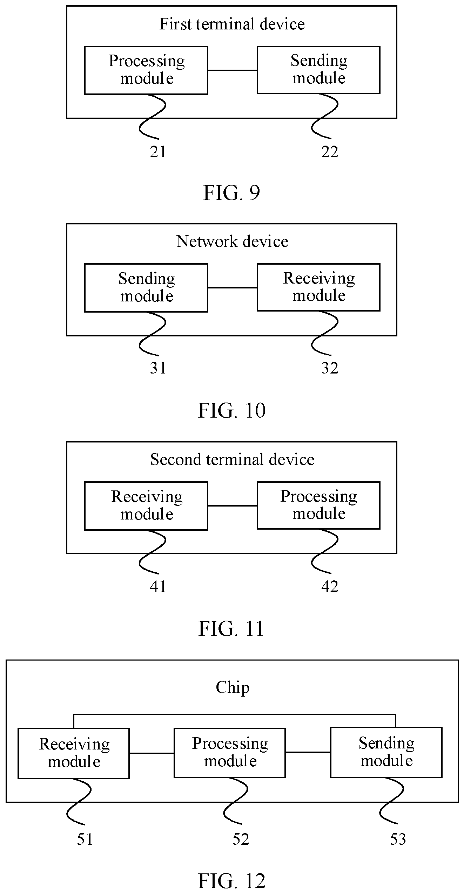

FIG. 9 is a schematic structural diagram of another terminal device according to this application. As shown in FIG. 9, the terminal device is a first terminal device, and the first terminal device may include a processing module 21 and a sending module 22.

The processing module 21 is configured to encapsulate n pieces of data of n logical channels respectively into n MAC PDUs, where the n pieces of data all include same to-be-sent data of a same PDCP entity, and n is a positive integer greater than 1; and
the sending module 22 is configured to send the n MAC PDUs and a retransmission identifier corresponding to the n pieces of data to a second terminal device through a straight-through link, where the n MAC PDUs use n carrier bearers.

Optionally, in some embodiments, if the retransmission identifier corresponding to the n pieces of data is carried in the n pieces of data, the retransmission identifier may include one or more of the following: an identifier of the PDCP entity to which the to-be-sent data belongs, a data priority identifier of the to-be-sent data, an identifier of a quality of service flow of the to-be-sent data, a destination address identifier of the to-be-sent data, and an identifier of a service type corresponding to the to-be-sent data.

Optionally, in some embodiments, the retransmission identifier may be carried in a MAC CE of at least one MAC PDU in the n MAC PDUs or a subheader corresponding to a MAC SDU in which the to-be-sent data is located. In this implementation, the retransmission identifier may include an identifier of the n logical channels, and/or an identifier of an RLC entity corresponding to the n logical channels, and the like. Alternatively, when the retransmission identifier is a first value, the retransmission identifier is used to instruct the first terminal device to transmit the same to-be-sent data of the same PDCP entity by using the n preset logical channels.

The first terminal device provided in this application may perform the actions of the first terminal device that are shown in FIG. 6 and that are in the foregoing method embodiments. Implementation principles and technical effects thereof are similar, and details are not described herein again.

FIG. 10 is a schematic structural diagram of a network device according to this application. As shown in FIG. 10, the network device may include a sending module 31.

The sending module 31 is configured to send first information to a first terminal device, where the first information is used to instruct the first terminal device to transmit same to-be-sent data of a same PDCP entity by using n logical channels, and the first information includes a first element; and the first element includes one or more of the following identifiers: a data priority identifier of the to-be-sent data, an identifier of a service type to which the to-be-sent data belongs, an identifier of a quality of service flow to which the to-be-sent data belongs, a destination address identifier of the to-be-sent data, an identifier of a logical channel group in which the n logical channels are located, n carrier identifiers corresponding to the n logical channels, and an identifier of the PDCP entity, where n is a positive integer greater than 1. For example, the first information is carried in a MAC CE or RRC signaling.

Optionally, in some embodiments, the first information includes a second element. When the second element is a first value, the first information is used to instruct the first terminal device to transmit the same to-be-sent data of the same PDCP entity by using the n logical channels; and when the second element is a second value, the first information is used to instruct the first terminal device to stop transmitting the same to-be-sent data of the same PDCP entity by using the n logical channels.

Optionally, in some embodiments, that the first information is used to instruct the first terminal device to transmit the same to-be-sent data of the same packet data convergence protocol PDCP entity by using the n logical channels includes that the first information is used to activate the first terminal device to transmit the same to-be-sent data of the same packet data convergence protocol PDCP entity by using the n logical channels. For example, the quality of service flow to which the to-be-sent data belongs corresponds to reliability of the to-be-sent data. Alternatively, the identifier of the quality of service flow to which the to-be-sent data belongs corresponds to the reliability of the to-be-sent data.

Optionally, in some embodiments, the first element includes a bitmap, and one bit in the bitmap corresponds to one identifier.

Optionally, in some embodiments, the first information further includes a third element. The third element is used to instruct the first terminal device to transmit a maximum time length of the same to-be-sent data of the same PDCP entity by using the n logical channels.

Continuing to refer to FIG. 10, optionally, in some embodiments, the network device further includes a receiving module 32. The receiving module 32 is configured to receive second information sent by the first terminal device before the sending module 31 sends the first information to the first terminal device, where the second information is used to request to activate the first terminal device to transmit the same to-be-sent data of the same PDCP entity by using the n logical channels. The second information includes one or more of the following: a data priority identifier of the to-be-sent data, an identifier of the service type to which the to-be-sent data belongs, an identifier of the quality of service flow to which the to-be-sent data belongs, a destination address identifier of the to-be-sent data, an identifier of the PDCP entity, and a channel congestion degree corresponding to at least one logical channel in the n logical channels.

The network device provided in this application may perform the actions of the network device in the foregoing method embodiments. Implementation principles and technical effects thereof are similar, and details are not described herein again.

FIG. 11 is a schematic structural diagram of still another terminal device according to this application. As shown in FIG. 11, the terminal device is a second terminal device, and the second terminal device may include a receiving module 41 and a processing module 42.

The receiving module 41 is configured to receive, through a straight-through link, n MAC PDUs sent by a first terminal device and a retransmission identifier corresponding to n pieces of data, where the n MAC PDUs use n carrier bearers, the n pieces of data of n logical channels are respectively encapsulated into the n MAC PDUs, the n pieces of data all include same to-be-sent data of a same PDCP entity, and n is a positive integer greater than 1; and
the processing module 42 is configured to process the n pieces of data based on the retransmission identifier corresponding to the n pieces of data by using the same PDCP entity. Optionally, in some embodiments, if the retransmission identifier corresponding to the n pieces of data is carried in the n pieces of data, the retransmission identifier may include one or more of the following: an identifier of the PDCP entity to which the to-be-sent data belongs, a data priority identifier of the to-be-sent data, an identifier of a quality of service flow of the to-be-sent data, a destination address identifier of the to-be-sent data, and an identifier of a service type corresponding to the to-be-sent data.

Optionally, in some embodiments, the retransmission identifier may be carried in a MAC CE of at least one MAC PDU in the n MAC PDUs or a subheader corresponding to a MAC SDU in which the to-be-sent data is located. In this implementation, the retransmission identifier may include an identifier of the n logical channels, and/or an identifier of an RLC entity corresponding to the n logical channels, and the like. Alternatively, when the retransmission identifier is a first value, the retransmission identifier is used to instruct the first terminal device to transmit the same to-be-sent data of the same PDCP entity by using the n preset logical channels.

The second terminal device provided in this application may perform the actions of the second terminal device in the foregoing method embodiments. Implementation principles and technical effects thereof are similar, and details are not described herein again.

It should be noted that, during actual implementation, the sending module may be a transmitter, and the receiving module may be a receiver. However, the processing module may be implemented in a form of invoking by software through a processing element or implemented in a form of hardware. For example, the processing module may be an independently disposed processing element, or may be integrated in a chip of the foregoing apparatus for implementation. In addition, the processing module may alternatively be stored in a memory of the foregoing apparatus in a form of program code, and a processing element of the device invokes and performs functions of the processing module. In addition, all or some of the modules may be integrated together, or may be independently implemented. The processing element herein may be an integrated circuit and has a signal processing capability. In an implementation process, steps in the foregoing methods or the foregoing modules can be implemented by using a hardware integrated logic circuit in the processing element, or by using instructions in a form of software.

For example, the foregoing modules may be one or more integrated circuits configured to implement the foregoing methods, for example, one or more application-specific integrated circuits (application specific integrated circuit, ASIC), one or more microprocessors (digital signal processor, DSP), one or more field programmable gate arrays (field programmable gate array, FPGA), or the like. For another example, when one of the foregoing modules is implemented in a form in which a processing element invokes program code, the processing element may be a general-purpose processor, for example, a central processing unit (central processing unit, CPU for short) or another processor that can invoke the program code. For another example, the modules may be integrated together, and are implemented in a form of a system-on-a-chip (system-on-a-chip, SOC for short).

FIG. 12 is a schematic structural diagram of an apparatus according to this application. As shown in FIG. 12, the apparatus may be a chip. The chip includes modules or units, for example, a receiving module 51 (which may also be referred to as a receiving unit), a processing module 52 (which may also be referred to as a processing unit), and a sending module 53 (which may also be referred to as a sending unit), configured to perform actions of the first terminal device shown in FIG. 5. Implementation principles and technical effects thereof are similar, and details are not described herein again.

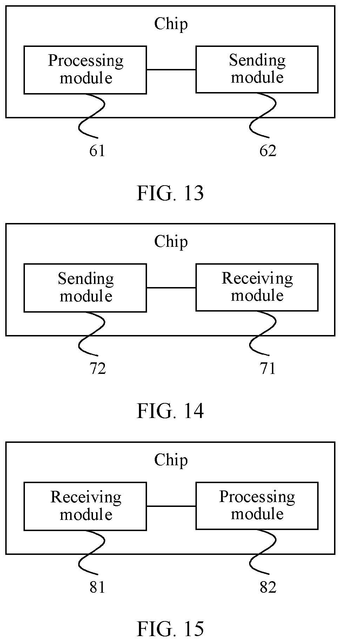

FIG. 13 is a schematic structural diagram of another apparatus according to this application. As shown in FIG. 13, the apparatus may be a chip. The chip includes modules or units, for example, a processing module 61 (which may also be referred to as a processing unit), and a sending module 62 (which may also be referred to as a sending unit), configured to perform actions of the first terminal device shown in FIG. 7. Implementation principles and technical effects thereof are similar, and details are not described herein again.

FIG. 14 is a schematic structural diagram of still another apparatus according to this application. As shown in FIG. 14, the apparatus may be a chip. The chip includes modules or units, for example, a receiving module 71 (which may also be referred to as a receiving unit), and a sending module 72 (which may also be referred to as a sending unit), configured to perform actions of the network device shown in FIG. 5. Implementation principles and technical effects thereof are similar, and details are not described herein again.

FIG. 15 is a schematic structural diagram of still another apparatus according to this application. As shown in FIG. 15, the apparatus may be a chip. The chip includes modules or units, for example, a receiving module 81 (which may also be referred to as a receiving unit), and a processing module 82 (which may also be referred to as a processing unit), configured to perform actions of the second terminal device shown in FIG. 7. Implementation principles and technical effects thereof are similar, and details are not described herein again.

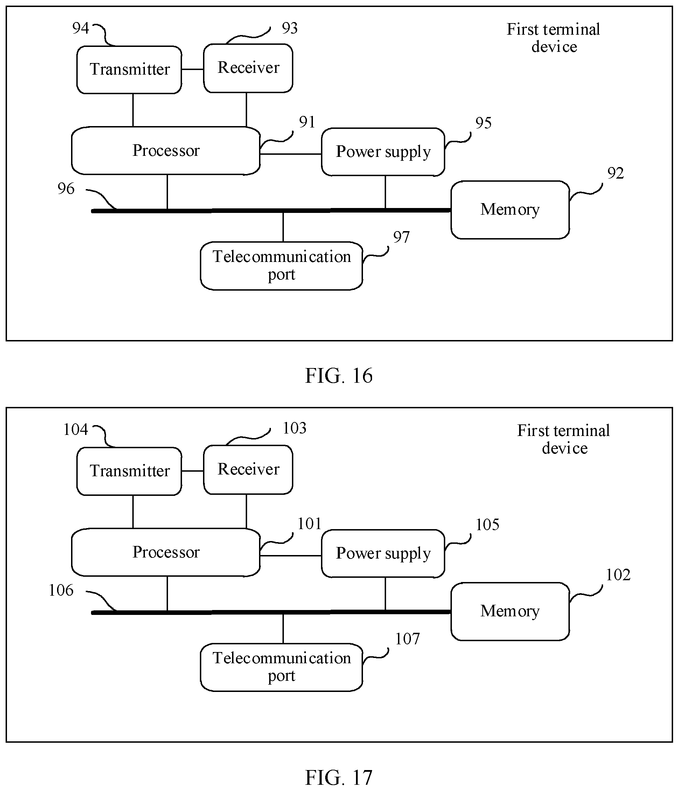

FIG. 16 is a schematic structural diagram of still another terminal device according to this application. As shown in FIG. 16, the terminal device is a first terminal device. The first terminal device may include a processor 91 (for example, a CPU), a memory 92, a receiver 93, and a transmitter 94. The receiver 93 and the transmitter 94 are both coupled to the processor 91, the processor 91 controls a receiving action of the receiver 93, and the processor 91 controls a sending action of the transmitter 94. The memory 92 may include a high-speed RAM memory, or may further include a non-volatile memory NVM, for example, at least one magnetic disk memory. The memory 92 may store various instructions, to implement various processing functions and implement method steps of this application. Optionally, the first terminal device in this application may further include a power supply 95, a communications bus 96, and a telecommunication port 97. The receiver 93 and the transmitter 94 may be integrated into a transceiver of the first terminal device, and may also be a transceiver antenna independent on the first terminal device. The communications bus 96 is configured to implement a communications connection between elements. The telecommunication port 97 is configured to implement connectivity communication between the first terminal device and another peripheral.

In this application, the memory 92 is configured to store computer executable program code, where the program code includes an instruction. When executed by the processor 91, the instruction enables the processor 91 to perform the processing action of the first terminal device that is shown in FIG. 5 and that is in the foregoing method embodiments, the receiver 93 to perform the receiving action of the first terminal device that is shown in FIG. 5 and that is in the foregoing method embodiments, and the transmitter 94 to perform the sending action of the first terminal device that is shown in FIG. 5 and that is in the foregoing method embodiments. Implementation principles and technical effects thereof are similar, and details are not described herein again.

FIG. 17 is a schematic structural diagram of still another terminal device according to this application. As shown in FIG. 17, the terminal device is a first terminal device. The first terminal device may include a processor 101 (for example, a CPU), a memory 102, and a transmitter 104. The transmitter 104 is coupled to the processor 101, and the processor 101 controls a sending action of the transmitter 104. The memory 102 may include a high-speed RAM memory, or may further include a non-volatile memory NVM, for example, at least one magnetic disk memory. The memory 102 may store various instructions, to implement various processing functions and implement method steps of this application. Optionally, the first terminal device in this application may further include a receiver 103, a power supply 105, a communications bus 106, and a telecommunication port 107. The receiver 103 and the transmitter 104 may be integrated in a transceiver of the first terminal device, and may also be a transceiver antenna independent on the first terminal device. The communications bus 106 is configured to implement a communications connection between elements. The telecommunication port 107 is configured to implement connectivity communication between the first terminal device and another peripheral.

In this application, the memory 102 is configured to store computer executable program code, where the program code includes an instruction. When executed by the processor 101, the instruction enables the processor 101 to perform the processing action of the first terminal device that is shown in FIG. 6 and that is in the foregoing method embodiments, and the transmitter 104 to perform the sending action of the first terminal device that is shown in FIG. 6 and that is in the foregoing method embodiments. Implementation principles and technical effects thereof are similar, and details are not described herein again.

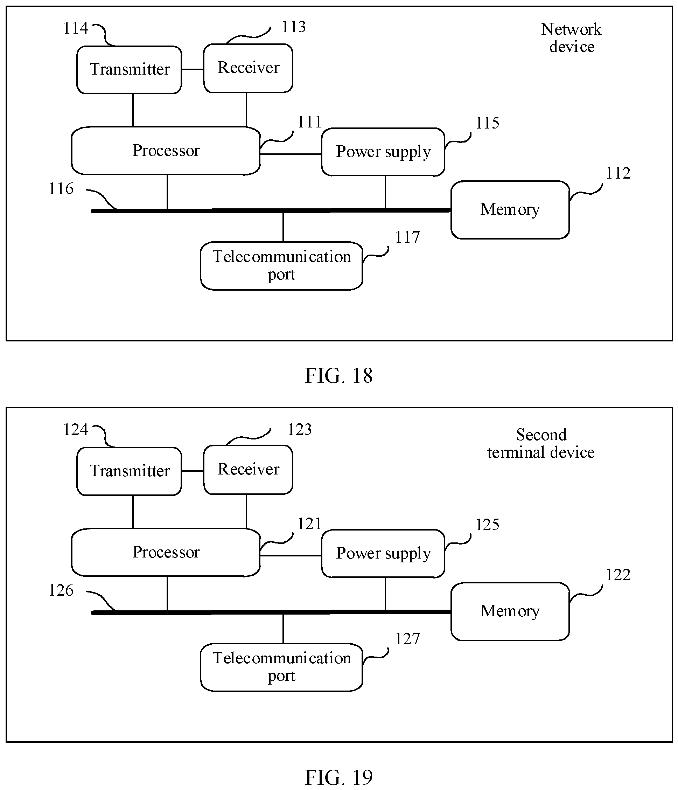

FIG. 18 is a schematic structural diagram of another network device according to this application. As shown in FIG. 18, the network device may include a processor 111 (for example, a CPU), a memory 112, a receiver 113, and a transmitter 114. The receiver 113 and the transmitter 114 are both coupled to the processor 111, the processor 111 controls a receiving action of the receiver 113, and the processor 111 controls a sending action of the transmitter 114. The memory 112 may include a high-speed RAM memory, or may further include a non-volatile memory NVM, for example, at least one magnetic disk memory. The memory 112 may store various instructions, to implement various processing functions and implement method steps of this application. Optionally, the network device in this application may further include a power supply 115, a communications bus 116, and a telecommunication port 117. The receiver 113 and the transmitter 114 may be integrated in a transceiver of the network device, and may also be a transceiver antenna independent on the network device. The communications bus 116 is configured to implement a communications connection between elements. The telecommunication port 117 is configured to implement connectivity communication between the network device and another peripheral.

In this application, the memory 112 is configured to store computer executable program code, where the program code includes an instruction. When executed by the processor 111, the instruction enables the processor 111 to control the transmitter 114 to perform the sending action of the network device in the foregoing method embodiments, and to control the receiver 113 to perform the receiving action of the network device in the foregoing method embodiments. Implementation principles and technical effects thereof are similar, and details are not described herein again.

FIG. 19 is a schematic structural diagram of still another terminal device according to this application. As shown in FIG. 19, the terminal device is a second terminal device. The second terminal device may include a processor 121 (for example, a CPU), a memory 122, and a receiver 123. The receiver 123 is coupled to the processor 121, and the processor 121 controls a receiving action of the receiver 123. The memory 122 may include a high-speed RAM memory, or may further include a non-volatile memory NVM, for example, at least one magnetic disk memory. The memory 122 may store various instructions, to implement various processing functions and implement method steps of this application. Optionally, the network device in this application may further include a transmitter 124, a power supply 125, a communications bus 126, and a telecommunication port 127. The receiver 123 and the transmitter 124 may be integrated in a transceiver of the network device, and may also be a transceiver antenna independent on the network device. The communications bus 126 is configured to implement a communications connection between elements. The telecommunication port 127 is configured to implement connectivity communication between the network device and another peripheral.

In this application, the memory 122 is configured to store computer executable program code, where the program code includes an instruction. When executed by the processor 121, the instruction enables the processor 121 to control the transmitter 124 to perform the processing action of the second terminal device in the foregoing method embodiments, and to control the receiver 123 to perform the receiving action of the second terminal device in the foregoing method embodiments. Implementation principles and technical effects thereof are similar, and details are not described herein again.

This application further provides a communications system, including the first terminal device, the network device, and the second terminal device that are described in the foregoing embodiments. Implementation principles and technical effects thereof are similar, and details are not described herein again.

All or some of the foregoing embodiments may be implemented by using software, hardware, firmware, or any combination thereof. When software is used to implement the embodiments, the embodiments may be implemented completely or partially in a form of a computer program product. The computer program product includes one or more computer instructions. When the computer program instructions are loaded and executed on the computer, the procedure or functions according to the embodiments of this application are all or partially generated. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, and microwave, or the like) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a DVD), a semiconductor medium (for example, a solid-state drive (SSD)), or the like.

The invention is defined in the appended set of claims.

## Claims

1. A data transmission method performed by a V2X first terminal device, comprising:
receiving (S102), by the first terminal device, first information from a network device, wherein the first information is used to instruct the first terminal device to transmit same to-be-sent data of a same packet data convergence protocol, PDCP, entity by using n logical channels to a second terminal device, and the first information comprises a destination address identifier for sending the to-be-sent data and the first information further comprises n carrier identifiers corresponding to the n logical channels, wherein n is a positive integer greater than 1;
encapsulating (S103), by the first terminal device, n pieces of data of the n logical channels respectively into n media access control, MAC, protocol data units, PDUs, based on the first information, wherein each of the n pieces of data comprise the to-be-sent data; and
sending (S104), by the first terminal device, the n MAC PDUs to the second terminal device through a straight-through link, wherein the straight-through link is a sidelink connection, wherein the n MAC PDUs are sent on n carriers corresponding to the n carrier identifiers, respectively.

2. The method according to claim 1, wherein that the first information is used to instruct the first terminal device to transmit the same to-be-sent data of the same packet data convergence protocol, PDCP, entity by using the n logical channels comprises:
the first information is used to activate the first terminal device to transmit the same to-be-sent data of the same packet data convergence protocol, PDCP, entity by using the n logical channels.

3. The method according to claim 1 or 2, wherein a quality of service flow on the PDCP entity, to which the to-be-sent data belongs corresponds to reliability of the to-be-sent data.

4. The method according to any one of claims 1 to 3, wherein the identifier of a quality of service flow to which the to-be-sent data belongs corresponds to the reliability of the to-be-sent data.

5. The method according to any one of claims 1 to 4, wherein the first information is carried in radio resource control, RRC, signaling.

6. A V2X terminal device, configured to perform the method according to any one of claims 1 to 5.

7. A computer-readable storage medium, comprising instructions which, when executed by a computer, cause the computer to carry out the method according to any one of claims 1 to 5.

## Patentansprüche

1. Datenübertragungsverfahren, durchgeführt durch eine erste V2X-Endgerätevorrichtung, das Folgendes umfasst:
Empfangen (S102), durch die erste Endgerätevorrichtung, von ersten Informationen von einer Netzwerkvorrichtung, wobei die ersten Informationen verwendet werden, um die erste Endgerätevorrichtung anzuweisen, die gleichen zu sendenden Daten einer gleichen Paketdatenkonvergenzprotokoll- bzw. PDCP-Entität unter Verwendung von n logischen Kanälen an eine zweite Endgerätevorrichtung zu übertragen, und wobei die ersten Informationen eine Zieladresskennung zum Senden der zu sendenden Daten umfassen und die ersten Informationen ferner n Trägerkennungen entsprechend den n logischen Kanälen umfassen, wobei n eine positive ganze Zahl größer als 1 ist;
Kapseln (S103), durch die erste Endgerätevorrichtung, von n Stücken von Daten der n logischen Kanäle entsprechend in n Medienzugangssteuerungs- bzw. MAC-Protokolldateneinheiten, PDUs, basierend auf den ersten Informationen, wobei jedes der n Stücke von Daten die zu sendenden Daten umfasst; und
Senden (S104), durch die erste Endgerätevorrichtung, der n MAC-PDUs an die zweite Endgerätevorrichtung durch eine Durchgangsverbindung, wobei die Durchgangsverbindung eine Sidelink-Verbindung ist, wobei die n MAC-PDUs jeweils auf n Trägern entsprechend den n Trägerkennungen gesendet werden.

2. Verfahren nach Anspruch 1, wobei, dass die ersten Informationen verwendet werden, um die erste Endgerätevorrichtung anzuweisen, die gleichen zu sendenden Daten der gleichen Paketdatenkonvergenzprotokoll- bzw. PDCP-Entität unter Verwendung der n logischen Kanäle zu übertragen, Folgendes umfasst:
die ersten Informationen werden verwendet, um die erste Endgerätevorrichtung zu aktivieren, um die gleichen zu sendenden Daten der gleichen Paketdatenkonvergenzprotokoll- bzw. PDCP-Entität unter Verwendung der n logischen Kanäle zu übertragen.

3. Verfahren nach Anspruch 1 oder 2, wobei ein Dienstgütefluss an der PDCP-Entität, zu der die zu sendenden Daten gehören, einer Zuverlässigkeit der zu sendenden Daten entspricht.

4. Verfahren nach einem der Ansprüche 1 bis 3, wobei die Kennung eines Dienstgüteflusses, zu dem die zu sendenden Daten gehören, der Zuverlässigkeit der zu sendenden Daten entspricht.

5. Verfahren nach einem der Ansprüche 1 bis 4, wobei die ersten Informationen in einer Funkressourcensteuerungs- bzw. RRC-Signalisierung getragen werden.

6. V2X-Endgerätevorrichtung, dazu ausgelegt, das Verfahren nach einem der Ansprüche 1 bis 5 durchzuführen.

7. Computerlesbares Speichermedium, das Anweisungen umfasst, die, wenn sie durch einen Computer ausgeführt werden, den Computer veranlassen, das Verfahren nach einem der Ansprüche 1 bis 5 auszuführen.

## Revendications

1. Procédé de transmission de données effectué par un premier dispositif terminal V2X, comprenant les étapes consistant à :
recevoir (S102), par le premier dispositif terminal, une première information en provenance d'un dispositif de réseau, la première information étant utilisée pour ordonner au premier dispositif terminal de transmettre des mêmes données à envoyer d'une même entité de protocole de convergence de données en paquets, PDCP, en utilisant n canaux logiques à un deuxième dispositif terminal, et la première information comprenant un identifiant d'adresse de destination pour l'envoi des données à envoyer et la première information comprenant également n identifiants de porteuse correspondant aux n canaux logiques, n étant un entier positif supérieur à 1 ;
encapsuler (S103), par le premier dispositif terminal, n morceaux de données des n canaux logiques respectivement dans n unités de données de protocole, PDU, de commande d'accès au support, MAC, sur la base de la première information, chacun des n morceaux de données comprenant les données à envoyer ; et
envoyer (S104), par le premier dispositif terminal, les n PDU MAC au deuxième dispositif terminal par une liaison directe, la liaison directe étant une connexion de liaison latérale, les n PDU MAC étant envoyées sur n porteuses correspondant aux n identifiants de porteuse, respectivement.

2. Procédé selon la revendication 1, dans lequel l'utilisation de la première information pour ordonner au premier dispositif terminal de transmettre les mêmes données à envoyer de la même entité de protocole de convergence de données en paquets, PDCP, en utilisant les n canaux logiques comprend :
l'utilisation de la première information pour activer le premier dispositif terminal pour lui faire transmettre les mêmes données à envoyer de la même entité de protocole de convergence de données en paquets, PDCP, en utilisant les n canaux logiques.

3. Procédé selon la revendication 1 ou 2, dans lequel un flux de qualité de service sur l'entité PDCP, auquel les données à envoyer appartiennent, correspond à la fiabilité des données à envoyer.

4. Procédé selon l'une quelconque des revendications 1 à 3, dans lequel l'identifiant d'un flux de qualité de service auquel les données à envoyer appartiennent correspond à la fiabilité des données à envoyer.

5. Procédé selon l'une quelconque des revendications 1 à 4, dans lequel la première information est transportée dans une signalisation de commande de ressources radio, RRC.

6. Dispositif terminal V2X, configuré pour effectuer le procédé selon l'une quelconque des revendications 1 à 5.

7. Support de stockage lisible par ordinateur, comprenant des instructions qui, lorsqu'elles sont exécutées par un ordinateur, amènent l'ordinateur à mettre en œuvre le procédé selon l'une quelconque des revendications 1 à 5.
